# EUROPÄISCHE PATENTSCHRIFT

(11) **EP 0 681 144 B1**
(45) Veröffentlichungstag und Bekanntmachung des Hinweises auf die Patenterteilung: **07.07.1999**
(21) Anmeldenummer: 95105880.9
(22) Anmeldetag: 20.04.1995
(51) Int. Cl.: F23G 5/027, F23G 5/46

(54) **Verfahren und Vorrichtung zum Verbrennen von Abfall**
Method and apparatus for incineration of waste
Procédé et dispositif d'incinération de déchets

(30) Priorität: 02.05.1994 DE 4415342
(43) Veröffentlichungstag der Anmeldung: 08.11.1995
(73) Patentinhaber: MESSER GRIESHEIM GmbH, 60547 Frankfurt (DE)
(72) Erfinder: Gross, Gerhard, Dr., D-47877 Willich (DE); Lichtmann, Frank, Dr., D-51645 Gummersbach (DE)

(56) Entgegenhaltungen:
- WO-A-88/08411
- DE-A- 3 327 203
- DE-A- 4 104 507
- DE-A- 4 308 551
- FR-A- 2 222 610
- US-A- 5 158 449

## Beschreibung

Die Erfindung betrifft ein Verfahren und eine Vorrichtung zum Verbrennen von Abfall in einem Schachtofen. Ein solches Verfahren und eine solche Vorrichtung sind aus Dokument DE-A-3 327 203 schon bekannt.

Bei der Entsorgung von Abfällen in Hausmüllverbrennungsanlagen fallen Aschen, Schlacken und Filterstäube an, die aufgrund der üblicherweise vorherrschenden Verbrennungstemperaturen von 850 bis 1050°C nur in kristalliner oder teilweise gesinterter Form vorliegen. Diese Verbrennungsrückstände enthalten Schwermetalle, Salze und organische Schadstoffe, so daß zur Entsorgung fast ausschließlich die Deponierung zur Verfügung steht. Rostaschen und -schlacken können bestenfalls als minderwertige Baustoffe eingesetzt werden, wobei jedoch die Gefahr der langfristigen unkontrollierten Freisetzung der oben genannten Schadstoffe gegeben ist. Kesselaschen und Flugstäube müssen auf Sondermülldeponien gelagert werden, sofern keine aufwendige Nachbehandlung erfolgt. Sich ständig verknappende Deponieräume, die Verschärfung der gesetzlichen Bestimmungen über die Vermeidung und Verwertung von Abfällen und die vorhandenen Probleme mit der Akzeptanz von Hausmüllverbrennungsanlagen erfordern eine wesentliche Verbesserung der thermischen Verbrennungsverfahren hinsichtlich einer verfahrenstechnischen Vereinfachung und einer Verbesserung der chemischen und physikalischen Eigenschaften dort verbleibender Rückstände.

In der Vergangenheit wurden bereits eine Vielzahl thermischer Entsorgungsverfahren, wie z.B. Verbrennung, Vergasung und Pyrolyse oder Kombinationen davon, entwickelt. Dabei lösen die bisher etablierten Verfahren, wie z.B. die Verbrennung in einem Schachtofen, die beschriebene Aufgabenstellung nur unvollständig, da ein hoher zusätzlicher Aufwand zur Nachbehandlung der Rückstände benötigt wird. Neuere Verfahren, die z.B. auf eine Pyrolyse und nachgeschaltete Hochtemperaturverbrennung oder -vergasung zurückgreifen (Schwel-Brenn- bzw. Thermoselect-Verfahren), erheben den Anspruch, nahezu frei von nur schwer verwertbaren Rückständen zu arbeiten, erreichen dieses Ziel jedoch nur durch Einsatz einer deutlich aufwendigeren und/oder schwer beherrschbaren Verfahrenstechnik.

Der Erfindung liegt daher die Aufgabe zugrunde, ein mit fossilen Brennstoffen betriebenes Verfahren und eine Vorrichtung zum Einschmelzen von Abfall zu schaffen, mit dem eine Nachbehandlung der festen und gasförmigen Verbrennungrückstände ohne hohen apparativen Aufwand erreicht werden kann.

Ausgehend von dem im Dokument DE-A-3 327 203 bekannten Stand der Technik ist diese Aufgabe erfindungsgemäß gelöst mit den im Anspruches 1 angegebenen Merkmalen.

Vorteilhafte Weiterbildungen der Erfindung sind in den Unteransprüchen angegeben.

Die Erfindung bewirkt vorteilhaft eine Trennung zwischen der Schachtofenschüttung und der mineralischen Schmelze, um die chemischen und physikalischen Eigenschaften der mineralischen Schmelze und der Eluatwerte zu gewährleisten.

Die Trennung des Abfalls von der sich im Unterofen befindlichen Schmelze wird durch einen im Schachtofen befindlichen wassergekühlten Rost erreicht, auf dem die Schüttung aus dem Abfall ruht.

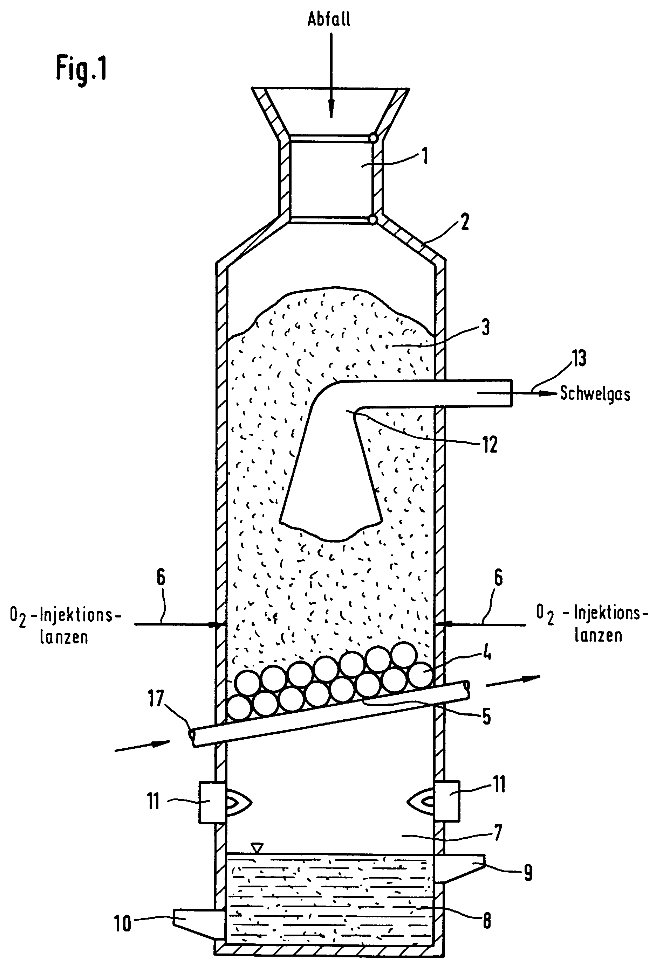

Ein Ausführungsbeispiel der Erfindung ist in der Zeichnung dargestellt und wird im folgenden näher beschrieben. Es zeigen
- Fig. 1: einen Schachtofen nach der Erfindung zum Einschmelzen von Abfall mit einem Brennstoff / Sauerstoff-Luft-Brenner und O₂-Injektionslanzen;
- Fig. 2: ein Verfahrensschema zur Nachbehandlung der Gase bzw. Rauchgase.

Die Abfälle, welche zuvor von Fe- und Buntmetallen sowie groben Inertstoffen befreit wurden - grobe nicht inerte Fraktionen werden grob zerkleinert -, werden über eine geeignete Vorrichtung 1 von oben in den aufrecht stehenden Schachtofen 2 gegeben. Die Aufgabevorrichtung soll geeignet sein, den Eintrag von Falschluft in das im Unterdruck betriebene System möglichst gering zu halten. Der Abfall befindet sich dann als Schüttung 3 in dem Ofen, in dem er sich entsprechend der Abzehrung der Schüttung im unteren Bereich nach unten bewegt. Die Abfallschüttung ruht auf einer Schüttung aus Kugeln 4 aus geeignetem feuerfestem keramischem Material, die Kugeln selbst ruhen auf einem Rost 5 aus parallelen, wassergekühlten und in einem Winkel von ca. 5° zur Horizontalen angeordneten Rohren 17. Oberhalb der Schüttung 3 aus den Kugeln 4 wird über Injektionslanzen 6 das Oxidationsmedium - reiner oder technisch reiner Sauerstoff oder mit reinem oder technisch reinem Sauerstoff angereicherte Luft mit einem Sauerstoffgehalt 30 Vol.% < O₂ > 100 Vol.% - mit hoher Geschwindigkeit - welche sowohl Über- als auch Schallgeschwindigkeit sein kann, in die Abfallschüttung 3 eingedüst. Der Sauerstoff wird vorzugsweise in einer kryogenen oder VSA-Sauerstoff-On-Site-Anlage mit einer Reinheit von 80 bis 100 % erzeugt. Unter der Einwirkung des Oxidationsmediums verbrennt der Abfall bei derart hohen Temperaturen, daß die unbrennbaren Anteile im Abfall aufschmelzen, vorzugsweise bei Temperaturen zwischen 1400 und 1600°C. Diese aufgeschmolzenen Rückstände fließen durch die Kugelschüttung 4 und den Rost 5 nach unten ab und sammeln sich im Unterofen 7 und bilden dabei eine mineralische Schmelze 8, welche über die obere Rinne 9 abfließt und weiteren Verarbeitungsschritten zugeführt wird. Durch den Rost 5 wird eine vorteilhafte räumliche Trennung zwischen der sich im Unterofen 7 sammelnden Schmelze 8 und der Abfallschüttung 3 erreicht. Durch die Durchströmung mit Kühlwasser bildet sich auf den Rohren 17 des Rostes 5 ein Schlackenpelz, der die Rohre 17 vor zu hoher thermischer und chemischer Beanspruchung schützt.

Restliche metallische unbrennbare Anteile, welche ebenfalls aufgeschmolzen und im Unterofen 7 gesammelt werden, separieren sich durch den Dichteunterschied von der mineralischen Schmelze und können nach Bedarf durch die untere Rinne 10 abgezogen werden. Im Unterofen 7 sind darüber hinaus Brenner 11 angeordnet, welche zum Aufheizen des Ofens beim Anfahren und im Bedarfsfall zur Temperaturerhöhung im Unterofen 7 dienen.

Der untere Teil des Schachtofens ist vorteilhaft auswechselbar gestaltet, um preiswerte Reparaturen besonders an den mit Schmelze in Kontakt kommenden Zonen der feuerfesten Ausmauerung des Schachtofens 2 zu ermöglichen. Die Schnittstelle zum oberen Teil des Schachtofens 2 kann sich dabei sowohl unter- als auch oberhalb des wassergekühlten Rostes 5 befinden. Der an den Kugeln aus feuerfestem keramischem Material auftretende Verschleiß wird vorteilhaft durch Zugabe neuer Kugeln 4 zu den aufgegebenen Abfällen erreicht.

Die beim Verbrennen und Aufschmelzen der Abfälle entstehenden sauerstoffarmen und CO₂- und H₂O-reichen Gase treten mit hoher Temperatur von unten in den noch unverbrannten Teil der Schüttung ein und führen dort zu einer Vergasung eines Teils der brennbaren Bestandteile der Abfälle gemäß dem Boudouard- und dem heterogenen Wassergas-Gleichgewicht. Durch die dabei auftretenden endothermen Reaktionen und die Aufheizung der Abfälle kühlen sich die Gase ab. Beim Durchströmen der darüber befindlichen kühleren Teile der Schüttung 3 kommt es zum Erliegen der Vergasungsreaktionen und es werden lediglich die leichter flüchtigen Bestandteile der Abfälle freigesetzt und pyrolisiert. Darüber wiederum befindet sich eine Zone, in der die Abfälle lediglich getrocknet werden. In diesem Bereich ist eine geeignete Abzugsvorrichtung 12 angeordnet, über welche die entstandenen Gase, im folgenden Schwelgase 13 genannt, durch den anliegenden Unterdruck abgezogen werden.

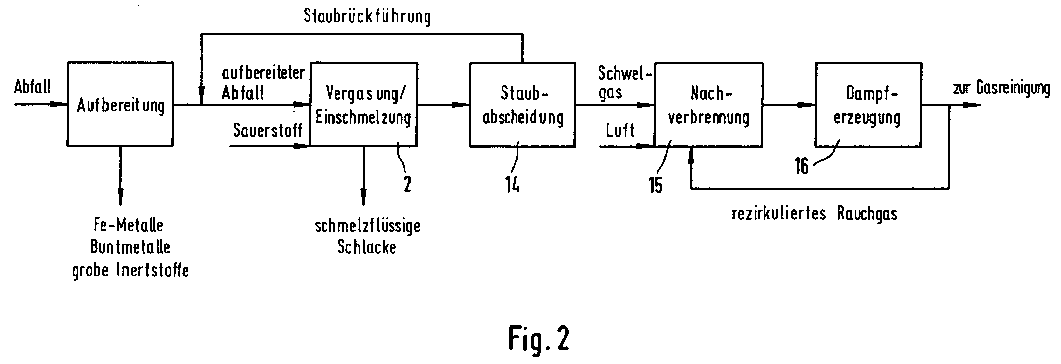

Gemäß dem in Figur 2 gezeigten Verfahrensschema werden die ca. 200°C heißen Schwelgase der Nachverbrennung zugeführt, welche mit Luft als Oxidationsmedium vorgenommen werden kann. Aufgrund des ausreichend hohen Heizwertes der erzeugten Gase sind in der Nachverbrennung Temperaturen von 850°C, wie bei der Hausmüllverbrennung, bis ca. 1200 - 1300°C, wie bei der Sondermüllverbrennung, einstellbar. In der Nachbrennkammer werden alle oxidierbaren Substanzen verbrannt, die erforderliche Verweilzeit ist über die Brennkammerdimensionierung einstellbar. Zur Begrenzung des Luftüberschusses und zur vorteilhaften Verringerung der Rauchgasmengen und Verbesserung des thermischen Wirkungsgrades besteht die Möglichkeit, einen Teil der erforderlichen Verbrennungsluft durch rezirkuliertes Rauchgas zu ersetzen.

Als vorteilhafte Weiterbildung des Verfahrens kann das erzeugte Gas bereits vor der Nachverbrennung einer Staubabscheidung 14 unterzogen werden. Die dort abgeschiedenen Stäube können vorteilhaft, ebenso wie alle, oder ein Teil der im Fall der Nachverbrennung ohne vorherige Staubabscheidung in den Gas- und Rauchgaswegen abgeschiedenen Stäube, wieder dem vorbereiteten Abfall zugegeben werden, gegebenenfalls nach einer Verfestigung durch Zugabe eines anorganischen Bindemittels. Die Entstaubung an dieser Stelle hat den Vorteil, daß die nachfolgenden Rauchgaswege, vor allem die Nachbrennkammer 15 und die Heizflächen des Dampferzeugers 16, weitestgehend vor Verschmutzung geschützt sind.

Als weitere vorteilhafte Weiterbildung des Verfahrens kann die Nachverbrennung, z.B. im Falle ohne vorherige Entstaubung, bei derart hohen Temperaturen von vorzugsweise 1300 bis 1400°C betrieben werden, daß die im Rauchgas enthaltenen Stäube aufschmelzen und in flüssiger Form aus dem unteren Teil des Nachverbrennungsraumes abgezogen werden.

Die heißen Rauchgase aus der Nachverbrennung werden einem Dampferzeuger mit Strahlungs- und Konvektivheizflächen zugeführt, um die den Rauchgasen innewohnende thermische Energie zu nutzen. Hinter dem Dampferzeuger oder hinter einer nachgeschalteten Entstaubung wird dem Rauchgasstrom die zur Rezirkulation erforderliche Rauchgasmenge entnommen. Die auf diese Weise vorteilhaft geringe Rauchgasmenge wird dann einem Gasreinigungsverfahren zugeführt, z.B. bestehend aus Feinstaubabscheidung, Wäsche und Nachreinigung.

## Patentansprüche

1. Verfahren zum Verbrennen von Abfall unter gleichzeitiger Erzeugung eines nutzbaren Gases und eines inerten mineralischen Rückstandes, bei dem Abfall in den oberen Teil eines aufrecht stehenden Schachtofens eingegeben und als Schüttung (3) auf einen im Schachtofen (2) vorgesehenen Rost (5) aufgeschüttet wird,
ein Brennstoff-Sauerstoff- oder ein Brennstoff-Sauerstoff-Luft-Gemisch unterhalb des Rostes (5) in den Schachtofen (2) eingebracht und oxidiert wird,
der Abfall (3) gegebenenfalls zusammen mit Verbrennungsrückständen bei Temperaturen von 1400 bis 1600°C verbrannt wird,
oberhalb des Rostes (5) reiner oder technisch reiner Sauerstoff oder mit reinem oder technisch reinem Sauerstoff angereicherte Luft mit Geschwindigkeiten gleich oder oberhalb der Schallgeschwindigkeit als Oxidationsmedium in die Abfallschüttung eingedüst wird.
der organische Teil der Abfallstoffe vergast und pyrolisiert, der anorganische Teil der Abfallstoffe fließfähig gemacht, das Schwelgas vom oberen Teil des Ofens abgezogen und das fließfähig gemachte anorganische Material am unteren Teil des Ofens abgezogen wird.

2. Verfahren nach Anspruch 1,
dadurch gekennzeichnet,
daß der Rost (5) wassergekühlt wird und auf dem Rost eine oder mehrere Lagen aus einem feuerfesten Werkstoff bestehende Kugeln (4) angeordnet sind.

3. Verfahren nach Anspruch 1 oder 2,
dadurch gekennzeichnet,
daß der Sauerstoffgehalt des Oxidationsmediums 30 Vol.% < O₂ < 100 Vol.% beträgt.

4. Verfahren nach einem der Ansprüche 1 bis 3,
dadurch gekennzeichnet,
daß zur Erzeugung des Sauerstoffes mit einer Reinheit von 80 bis 100 Vol.% eine kryogene oder VSA-Sauerstoff-On-Site-Anlage eingesetzt wird.

5. Verfahren nach einem der Ansprüche 1 bis 4,
dadurch gekennzeichnet,
daß alle oder ein Teil der in den Gas- und Rauchgaswegen abgeschiedenen Stäube dem Abfall (3) beigegeben werden.

6. Verfahren nach einem der Ansprüche 1 bis 5,
dadurch gekennzeichnet,
daß das erzeugte Gas in eine Nachbrennkammer (15) eingeleitet und unter Zuführung von Luft verbrannt wird.

7. Verfahren nach Anspruch 6,
dadurch gekennzeichnet,
daß das Rauchgas einem Dampferzeuger (16) mit Strahlungs- und/oder Konvektionsflächen zugeführt wird.

8. Vorrichtung zur Durchführung des Verfahrens nach Anspruch 1
bei der eine Abzugsvorrichtung (12) im oberen Teil des Ofens zum Abziehen des Schwelgases und ein Abzugsvorrichtung im unteren Teil des Ofens zum Abziehen des fließfähig gemachten anorganischen Materials vorgesehen sind, zwischen dem oberen und unteren Teil des Schachtofens (2) ein Rost (5) angeordnet ist, unterhalb des Rostes (5) mindestens ein Brenner (11) angeordnet ist,
der Brenner (11) an eine Brennstoff-/Sauerstoff- oder Brennstoff-/Sauerstoff-Luft-Versorgung angeschlossen ist, dadurch gekennzeichnet, daß oberhalb des Rostes (5) mindestens eine Injektionslanze (6) angeordnet ist,
daß die Injektionslanze (6) an eine Sauerstoff- oder Sauerstoff-Luft-Versorgung so angeschlossen ist;
daß der Sauerstoff oder das Sauerstoff-Luft-Gemisch mit Geschindigkeiten gleich oder oberhalb der Schallgeschwindigkeit eingeblasen wird.

9. Vorrichtung nach Anspruch 8,
dadurch gekennzeichnet,
daß der Rost (5) aus wassergekühlten Rohren (17) besteht und auf dem Rost (5) eine oder mehrere Lagen Kugeln (4) aus einem feuerfesten Werkstoff angeodnet sind.

## Claims

1. Process for burning waste with simultaneous regeneration of a usable gas and an inert mineral residue in which the waste is fed into the upper part of an upright shaft furnace and is loaded as a charge (3) onto a grate (5) provided in the shaft furnace (2), a fuel-oxygen or a fuel-oxygen-air mixture is introduced into the shaft furnace (2) beneath the grate (5) and oxidized, the waste (3) if appropriate together with combustion residues is burned at temperatures of 1400 to 1600°C, pure or technical-grade oxygen or air enriched with pure or technical-grade oxygen is injected at velocities equal to or above the speed of sound above the grate (5) into the waste charge, as oxidizing medium the organic part of the waste substances is gasified and pyrolysed, the inorganic part of the waste substances is made flowable, the low-temperature pyrolysis gas from the upper part of the furnace is taken off and the inorganic material made flowable is taken off at the lower part of the furnace.

2. Process according to Claim 1, characterized in that the grate (5) is water-cooled and one or more layers of spheres (4) composed of a refractory material are arranged on the grate.

3. Process according to Claim 1 or 2, characterized in that the oxygen content of the oxidizing medium is 30% by volume < O₂ < 100% by volume.

4. Process according to one of Claims 1 to 3, characterized in that a cryogenic or oxygen-on-site plant is used to generate the oxygen having a purity of 80 to 100% by volume.

5. Process according to one of Claims 1 to 4, characterized in that all or some of the dusts separated off in the gas and flue gas paths are added to the waste (3).

6. Process according to one of Claims 1 to 5, characterized in that the gas generated is passed into an afterburning chamber (15) and burned with feed of air.

7. Process according to Claim 6, characterized in that the flue gas is fed to a steam generator (16) having radiative and/or convection surfaces.

8. Apparatus for carrying out the process according to Claim 1, in which an extraction apparatus (12) is provided in the upper part of the furnace to take off the low-temperature pyrolysis gas, and an extraction apparatus is provided in the lower part of the furnace to take off the inorganic material made flowable, a grate (5) is arranged between the upper and lower part of the shaft furnace (2), at least one burner (11) is arranged beneath the grate (5), the burner (11) is connected to a fuel/oxygen or fuel/oxygen-air supply, characterized in that at least one injection lance (6) is arranged above the grate (5), in that the injection lance (6) is connected to an oxygen supply or oxygen-air supply in such a manner that the oxygen or the oxygen-air mixture is blown in at velocities equal to or above the speed of sound.

9. Apparatus according to Claim 8, characterized in that the grate (5) is composed of water-cooled tubes (17) and one or more layers of spheres (4) made of a refractory material are arranged on the grate (5).

## Revendications

1. Procédé d'incinération de déchets, avec génération simultanée d'un gaz utilisable et d'un résidu minéral inerte, procédé pour lequel
• les déchets sont introduits dans la partie supérieure d'un four droit monté verticalement et accumulés en vrac, sous la forme d'une masse en vrac (3) sur une grille (5) prévue dans le four à cuve (2),
• un mélange combustible-oxygène ou combustible-oxygène-air étant introduit au-dessous de la grille (5) dans le four à cuve (2) et oxydé,
• les déchets (3) étant incinérés, le cas échéant conjointement avec des résidus d'incinération, à des températures allant de 1400 à 1600°C,
• au-dessus de la grille (5), étant insufflé, à titre de milieu d'oxydation dans la masse en vrac des déchets, de l'oxygène pur ou techniquement pur, ou bien de l'air enrichi avec de l'oxygène pur ou techniquement pur, à des vitesses égales ou supérieures à la vitesse du son,
• la partie organique des déchets étant gazéifiée et pyrolysée, la partie non organique des déchets étant rendue fluide, le gaz dégagé de distillation lente ou à basse température étant extrait de la partie supérieure du four, et le matériau non organique rendu fluide étant extrait à la partie inférieure du four.

2. Procédé selon la revendication 1,
caractérisé en ce que
la grille (5) est refroidie à l'eau et une plusieurs couches de billes (4) constituées d'un matériau réfractaire étant disposé sur la grille.

3. Procédé selon la revendication 1 ou 2,
caractérisé en ce que
la teneur en oxygène du milieu d'oxydation est de : 30 % en volume < O₂ < 100 % en volume.

4. Procédé selon l'une des revendications 1 à 3,
caractérisé en ce que
pour générer de l'oxygène d'une pureté de 80 à 100 % en volume, est utilisée une installation cryogénique ou de production sur site d'oxygène, de type VSA.

5. Procédé selon l'une des revendications 1 à 4,
caractérisé en ce que
toutes ou une partie des poussières, séparées dans les parcours de gaz et de gaz de fumées, sont ajoutées aux déchets (3).

6. Procédé selon l'une des revendications 1 à 5,
caractérisé en ce que
le gaz généré est introduit dans une chambre de postcombustion (15) et brûlé avec apport d'air.

7. Procédé selon la revendication 6,
caractérisé en ce que
les gaz de fumées sont amenés à un générateur de vapeur (16) comportant des surfaces de rayonnement et/ou de convection.

8. Dispositif de mise en oeuvre du procédé selon la revendication 1,
dans lequel sont prévus,
• dans la partie supérieure du four, un dispositif d'extraction (12), pour extraire le gaz de distillation lente, et, dans la partie inférieure du four, un dispositif d'extraction, pour extraire le matériau non organique rendu fluide,
• entre la partie supérieure et la partie inférieure du four droit (2) est disposée une grille (5),
• au moins un brûleur (11) étant disposé au-dessous de la grille (5),
• le brûleur (11) est raccordé à une alimentation en carburant/oxygène ou carburant/oxygène-air,
caractérisé en ce que
• au dessus de la grille (5), est disposée au moins une lance d'injection (6),
• la lance d'injection (6) est raccordée à une alimentation en oxygène ou oxygène-air, de manière que l'oxygène ou le mélange oxygène-air soit insufflé à des vitesses égales ou supérieures à la vitesse du son.

9. Dispositif selon la revendication 8,
caractérisé en ce que
la grille (5) est constituée de tubes (17) refroidis par de l'eau et, sur la grille (5), sont disposées une ou plusieurs couches de billes (4) constituées d'un matériau réfractaire.
